# Europäisches Patentamt
## European Patent Office
## Office européen des brevets

(11) Veröffentlichungsnummer: **0 244 886**
**A2**

(12) **EUROPÄISCHE PATENTANMELDUNG**

(21) Anmeldenummer: **87200533.5**

(22) Anmeldetag: **08.03.87**

(51) Int. Cl.⁴: **G 01 B 7/16**

(30) Priorität: 10.03.86 DE 3607853
18.06.86 DE 3620383
27.11.86 DE 3640511

(43) Veröffentlichungstag der Anmeldung: **11.11.87**
**Patentblatt 87/46**

(84) Benannte Vertragsstaaten: **ES**

(71) Anmelder: **Rheinmetall GmbH,**
**Ulmenstrasse 125 Postfach 6609, D-4000 Düsseldorf**
**(DE)**

(72) Erfinder: **Knäbel, Horst, Dipl.-Ing., Friedenstrasse 10a,**
**D-4005 Meerbusch 1 (DE)**

(74) Vertreter: **Kossobutzki, Walter, Dipl.-Ing., Waldstrasse 6,**
**D-5419 Helferskirchen (DE)**

(54) Verfahren und Vorrichtung zur Überprüfung und/oder Erfassung der Masse, Massänderungen, Positionen oder Positionsänderungen von Werkstücken, Stellgliedern oder dgl.

(57) Bei einem Verfahren zur Überprüfung und/oder Erfassung der Masse, Massänderungen, Positionen oder Positionsänderungen von Werkstücken, Stellgliedern oder dgl., wird eine Mess- oder Stellgrösse von einem Taster abgegriffen und auf ein elastisch verformbares Messglied übertragen.

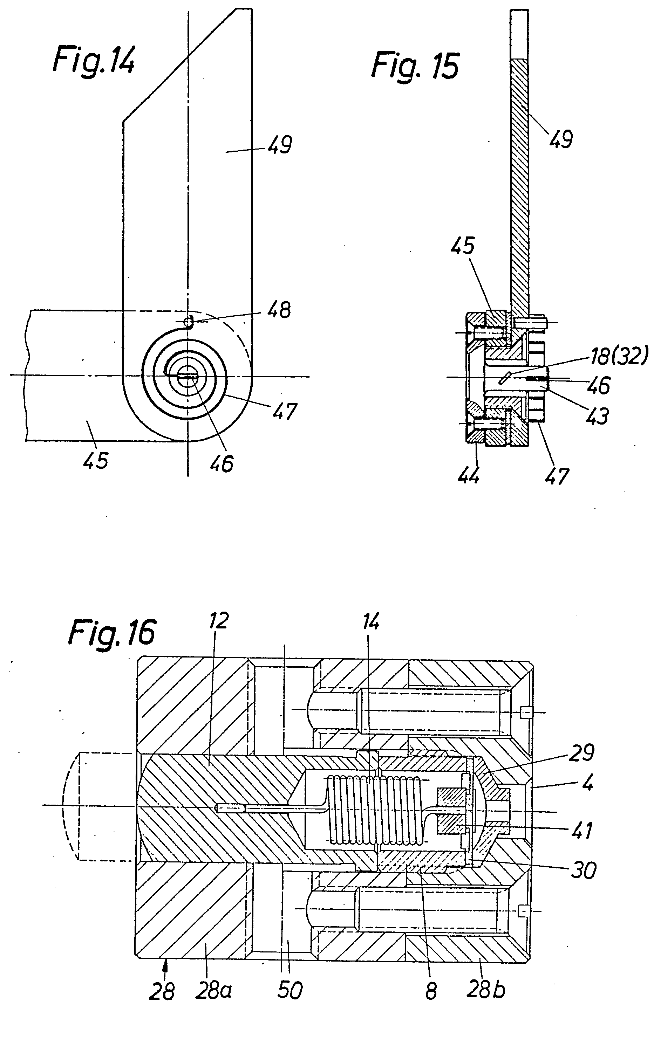

Um die Nachteile einer Biegefeder als Messwertwandler zu vermeiden und die Möglichkeit zu schaffen, dass Messgeräte nach gleichem System unter Verwendung möglichst vieler gleicher Bauteile einen grossen Messbereich abdecken, wird der Weg des Tasters über eine besondere, verhältnismässig weiche Feder in eine der Mess- oder Stellgrösse entsprechende Kraft umgewandelt und auf einen Sensor übertragen. (Fig. 16).

EP 0 244 886 A2

Dipl.-Ing. Horst Knäbel, Friedenstraße 10a, 4005 Meerbusch 1

Verfahren und Vorrichtung zur Überprüfung und/oder Erfassung der Maße, Maßänderungen, Positionen oder Positionsänderungen von Werkstücken, Stellgliedern oder dgl.

Die Erfindung bezieht sich auf ein Verfahren zur Überprüfung und/oder Erfassung der Maße, Maßänderungen, Positionen oder Positionsänderungen von Werkstücken, Stellgliedern oder dgl., bei dem eine Meß- oder Stellgröße von einem Taster abgegriffen und auf ein elastisch verformbares Meßglied übertragen wird, sowie auf eine Vorrichtung zur Durchführung des Verfahrens.

Um die Maße von Werkstücken oder dgl. überprüfen zu können, ist es bekannt, zwei oder mehr Meßvorrichtungen in einer Meßleiste oder einem Meßdorn anzuordnen. Dabei sind die Meßvorrichtungen in einer besonderen Ausnehmung des Meßdornes oder der Meßleiste eingesetzt und ein Taster der Vorrichtung ragt über den Meßdorn oder über die Meßleiste hinaus. Jeder Taster einer Meßvorrichtung ist auf einen vorgegebenen Wert justiert, so daß jede Maßänderung bzw. Maßabweichung festgestellt werden kann. Die Bewegung des Tasters bzw. dessen Meßweg wird von dem Taster auf das freie Ende einer einseitig eingespannten Biegefeder übertragen. Diese Biegefeder ist sowohl auf ihrer Oberseite als auch auf ihrer Unterseite mit jeweils einem Dehnungsmeßstreifen versehen, wobei die beiden Dehnungsmeßstreifen meist zu einer Halbbrücke zusammengeschaltet sind. Die Widerstandsmessung der Halbbrücke ist dabei proportional der Auslenkung der Feder und gibt die festgestellte Maßänderung wieder. Ein derartiges Verfahren zur Überprüfung der Maße von Werkstücken oder dgl. hat den Nachteil, daß an der Biegefeder, die aus Einbaugründen eine gewisse Länge nicht überschreiten soll, insbesondere bei relativ großen Meßbereichen bzw. Meßwegen erst allmählich sich zurückbildende Spannungen auftreten, die zu Meßungenauigkeiten führen. Trotz verhältnismäßig kurzer Biegefedern erfordern die bekannten Vorrichtungen einen großen, besonders geformten Einbauraum, wodurch sich zwangsläufig ein großer Abstand zwischen den einzelnen Meßvorrichtungen ergibt. Diese Baugröße bringt es mit sich, daß mit einer solchen Meßvorrichtung nicht jede Meßaufgabe gelöst werden kann und daß insbesondere bei Ansätzen, Ecken und Kanten am zu messenden Werkstück Hilfsmittel, wie Umlenkhebel oder dgl., zwischengeschaltet werden müssen. Durch die besondere Bauform und die Unzulänglichkeit der Meßvorrichtungen bedingt, ist der gesamte Meßaufbau teuer und der verfügbare Meßweg bleibt auf einen sehr kleinen Bereich beschränkt. Verwendet man induktive Geber, um bei einem großen Meßweg die Nachteile einer Biegefeder von vornherein auszuschließen, so umgeht man aber nicht das Problem der erforderlichen Hilfsmittel, wie Umlenkhebel oder dgl., da induktive Geber sehr lang bauen. Auch bei der Verwendung dieser Geber in Meßböcken ergibt sich ein hoher Aufwand für die Anstellung der Taster an das Werkstück und umgekehrt, was sich ebenfalls negativ auf die Baugröße und die Kosten auswirkt.

Der Erfindung liegt deshalb die Aufgabe zugrunde, ein Verfahren zur Überprüfung der Maße, Maßänderungen, Positionen oder Positionsänderungen von Werkstücken, Stellgliedern oder dgl. zu schaffen, welches die Nachteile einer Biegefeder als Meßwertwandler vermeidet. Zusätzlich soll die Möglichkeit geschaffen werden, daß Meßgeräte nach gleichem System unter Verwendung möglichst vieler gleicher Bauteile einen großen Meßbereich abdecken und daß die Anstellung in die Meßposition mit in das Meßgerät integriert wird. Die Vorrichtungen sollen preiswerter werden und nicht nur auf kleinstem Raum, sondern auch universell einsetzbar sein.

Zur Lösung der zuerst genannten Aufgabe wird bei dem Verfahren vorgeschlagen, daß der Weg des Tasters über eine besondere, verhältnismäßig weiche Feder in eine der Meß- oder Stellgröße entsprechende Kraft umgewandelt und auf einen Meßsensor übertragen wird. Durch dieses Verfahren wird die federnde Funktion weitgehend von dem Meßglied bzw. Sensor weggenommen und auf die zusätzliche Feder übertragen. Dadurch wird das Meßglied bzw. der Sensor nur noch in einem solchen Bereich durch die Feder verformt, der keinerlei Ermüdungserscheinungen mit sich bringt, so daß auch über einen längeren Zeitraum keinerlei Meßungenauigkeiten auftreten. Die Steifigkeit der Feder wird dabei entsprechend dem Meßbereich gewählt. Bei einem großen Meßbereich wird die Feder weicher als bei einem kleinen Meßbereich gewählt. Die damit verbundene Möglichkeit, die wegproportionale Kraft konstant zu halten, bietet die Chance, Meßvorrichtungen mit unterschiedlichen Meßbereichen mit den gleichen Sensoren auszustatten. Je nach Bedarf kann die Kraft drückend und/oder ziehend oder als Torsionsmoment auf den Sensor übertragen werden. Dadurch bedingt, daß der Meßkraftwiderstand zusätzlich zu der dem Meßweg entsprechenden Kraft durch mindestens eine weitere Feder und/oder druckwirksame Fläche gebildet wird, ist es möglich, die Taster der einzelnen Meßvorrichtungen ohne zusätzliche Einrichtungen auf die jeweilige Meßposition zu bringen.

Die Ausbildung der Vorrichtung gemäß der Erfindung ist in den Ansprüchen 5 - 25 offenbart.

Die Erfindung wird nachfolgend anhand in einer Zeichnung dargestellter Ausführungsbeispiele näher erläutert. Dabei zeigen

Fig. 1    einen Schnitt durch einen Meßdorn mit zwei Meßvorrichtungen gemäß der Erfindung,

Fig. 2    eine Ansicht von unten auf eine Meßvorrichtung der Fig. 1,

Fig. 3    eine Ausbildung eines Dehnungsmeßstreifens,

Fig. 4    eine weitere Ausbildung einer Vorrichtung gemäß der Erfindung,

Fig. 5    die Unterseite eines scheibenartigen Sensors mit Dehnungsmeßstreifen gemäß Fig. 4,

Fig. 6    eine Schaltung der Dehnungsmeßstreifen der Fig. 5,

Fig. 7    eine Ausbildung des Kopfes eines Tasters,

Fig. 8    eine weitere Ausbildung eines Tasterkopfes,

Fig. 9    eine weitere Ausbildung einer Vorrichtung gemäß der Erfindung,

Fig. 10   eine der Fig. 9 entsprechende, abgeänderte Vorrichtung,

Fig. 11   die Unterseite des Sensors der Fig. 9,

Fig. 12   eine Draufsicht auf eine Kontaktscheibe der Fig. 9,

Fig. 13   einen Schnitt durch das Gehäuse der Fig. 10 unterhalb der Buchse,

Fig. 14   eine Draufsicht auf eine weitere Ausbildung einer Vorrichtung gemäß der Erfindung,

Fig. 15   einen Schnitt durch die Vorrichtung der Fig. 14,

Fig. 16   eine Meßvorrichtung mit einem anstellbaren Taster,

Fig. 17   eine Vorrichtung mit einem verhältnismäßig großen Meßweg,

Fig. 18   eine weitere Vorrichtung mit einem anstellbaren Taster und

Fig. 19   eine Vorrichtung mit einem Temperaturkompensator.

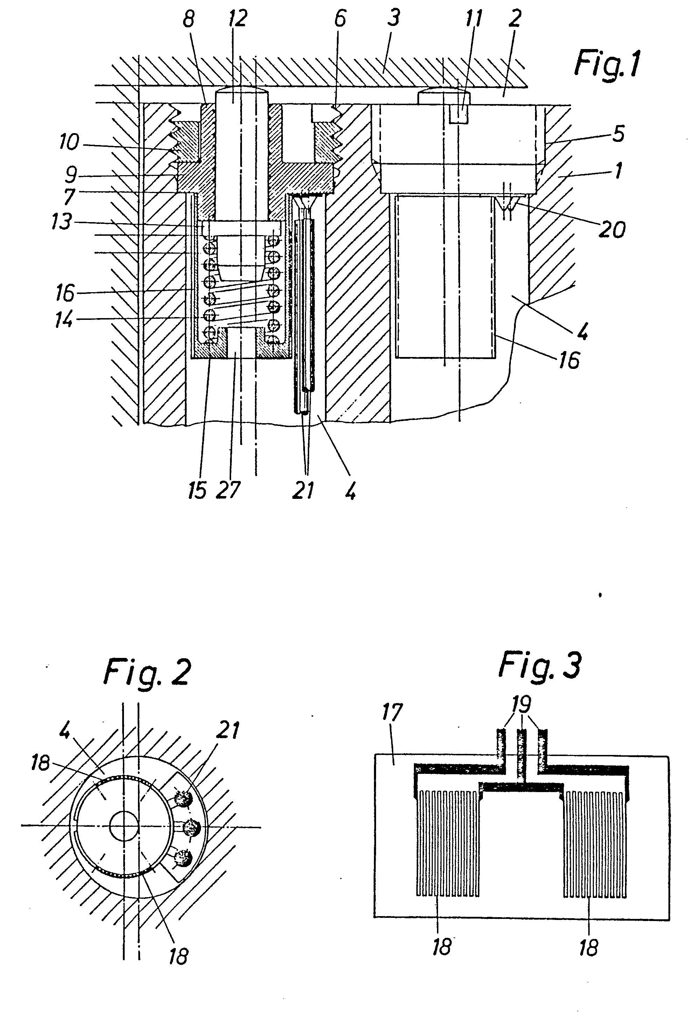

In der Fig. 1 der Zeichnung ist ausschnittsweise das Ende eines Meßdornes 1 im Schnitt gezeigt, der in einer Bohrung 2 eines nur angedeuteten Werkstückes 3 zur Überprüfung der Maße der Bohrung 2 angeordnet ist. Im dargestellten Bereich weist der Meßdorn 1 zwei mit Abstand voneinander verlaufende, radiale Bohrungen 4 auf, in die jeweils eine Meßvorrichtung 5 eingesetzt ist. Zur eigentlichen Aufnahme der Meßvorrichtung 5 besitzt jede Bohrung 6 in ihrem äußeren Bereich eine mit Gewinde versehene Erweiterung, die mit einer Anschlagfläche 7 endet. Jede Meßvorrichtung 5 besteht aus einer Buchse 8 mit einem umlaufenden Bund 9, der in diesem Ausführungsbeispiel exzentrisch zur Buchse 8 ausgebildet ist. Dies bedeutet, daß sich die Buchse 8 außermittig in der Bohrung 4 bzw. der Erweiterung 6 befindet. Mittels eines Gewinderinges 10 mit Einschraubschlitzen 11 ist die Buchse 8 und damit die Meßvorrichtung 5 ortsfest an der Anschlagfläche 7 gesichert.

Die Buchse 8 nimmt einen stiftartigen Taster 12 auf, der mit seinem äußeren Ende über die Buchse 8, insbesondere aber über die Oberfläche des Meßdornes 1 hinausragt. An seinem inneren Ende ist der Taster 12 mit einem Kragen 13 versehen, der einerseits die äußere Endlage des Tasters 12 begrenzt und andererseits eine Anlage für eine gering vorgespannte Druckfeder 14 aus Federstahl bildet. Diese Druckfeder 14 stützt sich mit ihrem anderen Ende an einem Boden 15 einer Hülse 16 ab, die an der Buchse 8, beispielsweise durch Klebung, befestigt ist. Die Hülse 16 kann entweder geschlossen oder mit einem Längsschlitz ausgebildet sein; sie ist in vorteilhafter Weise zusammen mit dem Boden 15 durch einen Fließpreßvorgang hergestellt.

Die Wandstärke der Hülse 16 ist etwa 0,1 - 0,2 mm und der Innendurchmesser der Hülse 16, der dem inneren Außendurchmesser der Buchse 8 entspricht, beträgt beispielsweise 3 mm. Dieser Querschnitt stellt sicher, daß sich die Hülse 16 bei einer max. Federkraft von ca. 2 Newton in einem absolut elastischen Bereich verformt, dessen Größe mit dem menschlichen Auge nicht wahrnehmbar ist. Zur Messung dieser Verformung ist auf der Außenseite der Hülse 16 eine Folie 17 (Fig. 3) aufgebracht, die mit zwei Dehnungsmeßstreifen 18 versehen ist. Damit bildet die Hülse 16 zusammen mit den Dehnungsmeßstreifen 18 einen Sensor. Die Dehnungsmeßstreifen 18 können beispielsweise aufgeklebt werden. Dabei sind die beiden Dehnungsmeßstreifen 18 so auf der Folie 17 angeordnet, daß sie sich im aufgeklebten Zustand der Folie an diametral gegenüberliegenden Seiten der Hülse 16 befinden. Von den Dehnungsmeßstreifen 18 führen Lötfahnen 19 zu Lötpunkten 20, die sich an der isolierten Unterseite des Bundes 9 befinden. Hier können nun die nur angedeuteten Leitungen 21 befestigt werden, über die der Widerstand und seine Änderungen bei einer Verformung der Hülse 16 gemessen werden können. Die exzentrische Anordnung des Bundes 9 ergibt dabei den notwendigen Platz für die Lötpunkte und die Leitungen 21 (Fig. 1 und 2).

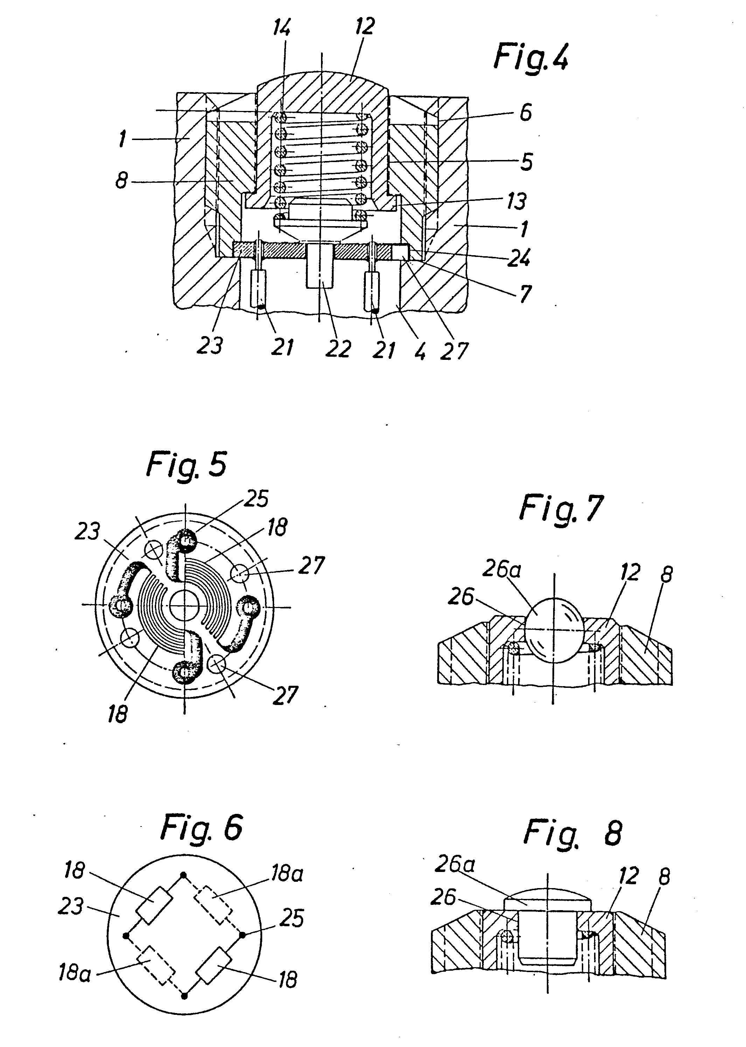

Die in der Fig. 4 der Zeichnung dargestellte Meßvorrichtung 5 ist ebenfalls in einer radialen Bohrung eines Meßdornes 1 oder einer Meßleiste angeordnet. Auch hier weist die Bohrung 4 in ihrem äußeren Bereich eine mit Gewinde versehene Erweiterung 6 auf, in die eine Buchse 8 eingeschraubt ist. Die Buchse 8 liegt an einer Anschlagfläche 7 an. In der Buchse 8 ist ein stiftartiger Taster 12 axial verschiebbar geführt, dessen gezeichnete, äußere Endlage durch einen Kragen 13, der an einem umlaufenden Bund der Buchse 8 anliegt, bestimmt wird. Im Gegensatz zum Ausführungsbeispiel der Fig. 1 ist hier der Taster 12 einseitig offen ausgebildet und kann somit den größten Teil einer leicht vorgespannten Druckfeder 14 aufnehmen. Mit ihrem aus dem Taster 12 herausragenden Ende stützt sich die Druckfeder 14 an einem Kraftübertragungsglied 22 ab, welches zentrisch in einer Bohrung eines plattenartigen Sensors 23 eingesteckt ist. Der plattenartige Sensor 23, der eine kreisförmige Grundfläche aufweist (Fig. 5), liegt einerseits an der Anschlagfläche 7 an und ist andererseits in einer ringförmigen Ausnehmung 24 der Buchse 8 in diesem Ausführungsbeispiel mit Spiel fixiert. Über die Druckfeder 14 und das Kraftübertragungsglied 22 wird der plattenartige Sensor 23 stets an der Anschlagfläche 7 gehalten.

Im dargestellten Ausführungsbeispiel ist der plattenartige Sensor 23 auf jeder Grundfläche, also beidseitig, mit jeweils zwei Dehnungsmeßstreifen 18,18a bestückt, von denen in der Fig. 5 nur die Dehnungsmeßstreifen 18 einer Seite zu sehen sind. Die auf der anderen Seite des plattenartigen Sensors 23 befindlichen Dehnungsmeßstreifen 18a sind in Fig. 6 angedeutet. Die beiden Dehnungsmeßstreifen 18 bzw. 18a einer Seite sind gleich ausgebildet und sich gegenüberliegend, also symmetrisch, angeordnet. Dabei sind die Dehnungsmeßstreifen 18a der Rückseite gegenüber den Dehnungsmeßstreifen 18 der Vorderseite um 90° gegeneinander versetzt, so daß sich die mit Bohrungen versehenen Eckpunkte 25 der einzelnen Dehnungsmeßstreifen 18, 18a deckungsgleich übereinander befinden und über die den plattenartigen Sensor 23 durchdringenden Leitungen 21 zu einer Wheatstoneschen Brückenschaltung (Fig. 6) verbunden sind. Bei der Verwendung von Keramik oder einem sonstigen isolierenden Plattenwerkstoff können die Dehnungsmeßstreifen 18,18a beispielsweise aufgedampft oder herausgeätzt werden und eine Isolierung der Enden der Leitungen 21 ist somit nicht erforderlich.

Auch bei der Meßvorrichtung 5 der Fig. 4 wird eine axiale Verschiebung des Tasters 12 gegen die Feder 14 und das Kraftübertragungsglied 22 in den mit den Dehnungsmeßstreifen 18, 18a bestückten, plattenartigen Sensor 23 eingeleitet, was zu einer geringfügigen Verformung führt, die über die sich ebenfalls verformenden Dehnungsmeßstreifen 18,18a als Widerstandsänderung gemessen werden kann. Die Feder 14 kann eine lineare, progressive oder degressive Kennlinie aufweisen. Die Feder 14, die als Druckfeder ausgebildet ist, wird zweckmäßigerweise so gewählt, daß sie ihre maximale Kraft, die der maximalen zulässigen Meßkraft entspricht, beim jeweils größten Meßwert erreicht, der je nach Aufgabe verschieden groß sein kann. Der Freiraum der Feder 14 muß dementsprechend ausgelegt sein. Die Feder 14 kann weitgehend beliebige Formen aufweisen und auch aus einem anderen, vorzugsweise aus dehnungs- und hysteresearmen Werkstoff bestehen.

Die stiftartigen Taster 12 sind nicht dichtend, sondern mit einem Spalt in den Buchsen 8 geführt. Ferner weist der Boden 15 des hülsenartigen Sensors 16 bzw. der plattenartige Sensor 23 mindestens einen Strömungskanal 27 auf, dessen Querschnitt erheblich größer als der Spalt zwischen dem Taster 12 und der Buchse 8 ist. Dies gibt die Möglichkeit, den inneren Bereich der Bohrung 4 über einen nicht näher gezeichneten Kanal für die Leitungen 21 an eine Spülluftleitung anzuschließen. Dies stellt sicher, daß in das Innere der Meßvorrichtungen kein Schmutz und keine Flüssigkeit eindringen kann. Als Spülluft wird gereinigte, trockene Druckluft von etwa 0,05 bis 0,5 bar gewählt. Aufgrund der weiter oben angegebenen Maße für den hülsenartigen Sensor 16 kann die Meßvorrichtung 5 mit einem sehr kleinen Außendurchmesser ausgeführt werden. Dieser beträgt bei der Ausführung nach Fig. 1 beispielsweise 6 mm und bei der Ausführung nach Fig. 4 beispielsweise 8 mm.

Dies ergibt nicht nur eine preiswerte Meßvorrichtung 5, sondern stellt sicher, daß zwei Meßvorrichtungen, auch in einem Eck- oder Kantenbereich, mit sehr geringem Abstand voneinander angeordnet werden können, zumal die Buchse 8 und der Taster 12 noch beliebig nach außen verlängerbar sind. Dadurch, daß unabhängig von dem plattenartigen Sensor 23 die Buchse 8, der Taster 12 und die Feder 14 frei wählbar sind, bietet diese Vorrichtung die Möglichkeit einer universellen Anpassung an nahezu jede sich stellende Meßaufgabe.

In den Fig. 7 und 8 der Zeichnung ist der Taster 12 an seinem äußeren Ende mit einer Bohrung 26 versehen, in die besondere, beispielsweise aus Hartmetall oder Diamant bestehende Tastköpfe 26a eingesetzt werden können.

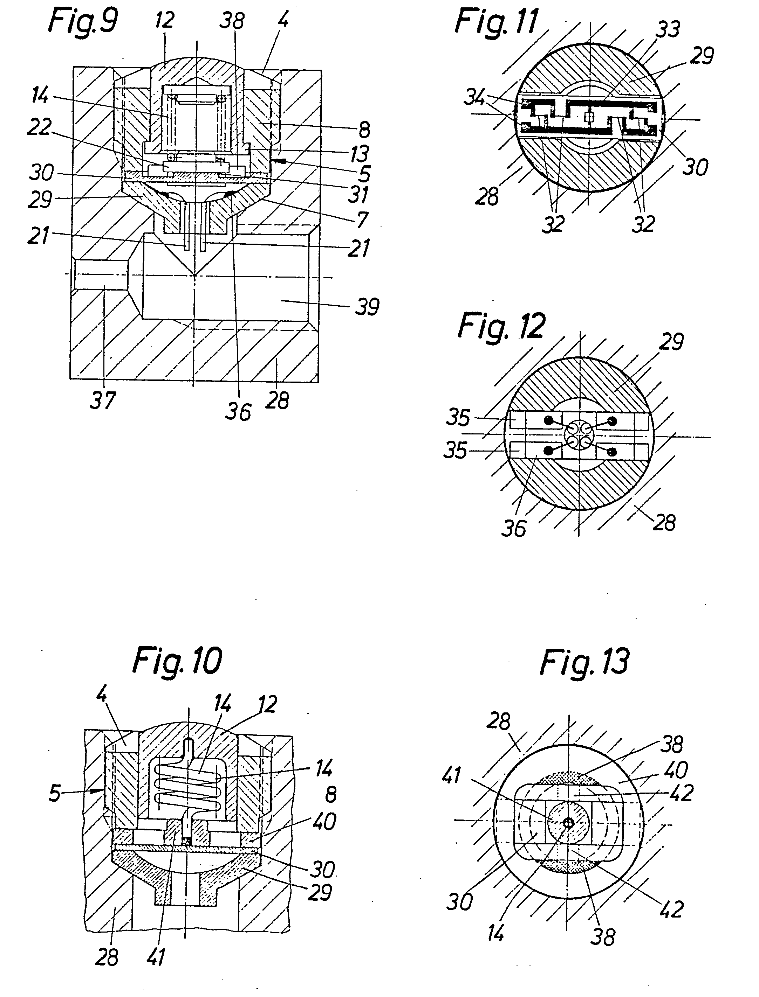

Bei dem Ausführungsbeispiel der Fig. 9 ist die eigentliche Meßvorrichtung 5 in ein besonderes Gehäuse 28 eingesetzt, welches auf einer Meßleiste oder auf einem Meßdorn befestigt werden kann. Das Gehäuse 28 besitzt hier ebenfalls eine Bohrung 4, in die die Buchse 8 der Meßvorrichtung 5 eingeschraubt ist. Die Anschlagfläche 7 ist in diesem Ausführungsbeispiel konkav ausgebildet und dient zur Abstützung einer Kontaktscheibe 29. Zwischen der Kontaktscheibe 29 und der Buchse 8 ist der Sensor 30 eingespannt, der hier als balkenartige Brücke ausgebildet ist (Fig. 11). Auf einem Ansatz 31 des Sensors 30 stützt sich das Kraftübertragungsglied 22 ab, welches hier, im Gegensatz zu der Ausführung der Fig. 4, nicht durch den Sensor 30 ragt.

Der Sensor 30 ist an seiner Unterseite in diesem Ausführungsbeispiel mit vier Widerstandselementen versehen, durch die die optisch nicht erkennbaren Verformungen des Sensors 30 erfaßt und gemessen werden können. Die Widerstände 32 sind

mit als gedruckte Schaltungen ausgebildeten Leitungen 33 verbunden, die an ihren Enden Kontaktflächen 34 aufweisen. Diese Kontaktflächen 34 stehen mit Kontaktflächen 35 in Verbindung, die auf der Kontaktscheibe 29 angeordnet sind (Fig. 12). Die Kontaktflächen 35 sind mit Lötbahnen 36 verbunden, an denen die Leitungen 21 angeschlossen sind. Die Leitungen 21 sind über einen Kanal 37 in an sich bekannter Weise nach außen geführt.

Auf der Kontaktscheibe 29 können Anschläge 38 angebracht sein, durch die die axiale Bewegung des Tasters 12 begrenzt ist. Bedarfsweise kann zwischen der Buchse 8 und dem Sensor 30 eine nicht dargestellte Scheibe angeordnet sein, durch die der Sensor 30 bei der Montage gegen Anzugsreibung geschützt ist. Durch Veränderung der Höhe dieser Scheibe kann die Meßkraft dem Meßweg angepaßt werden. An einen Kanal 39 kann eine Spülluftleitung angeschlossen werden. Dies setzt jedoch voraus, daß die Leitungen 21 in dem Kanal 37 abgedichtet sind.

In der Fig. 10 der Zeichnung ist eine weitere Meßvorrichtung 5 gezeigt, die in ihrem grundsätzlichen Aufbau mit der Vorrichtung der Fig. 9 übereinstimmt. Hier ist der Sensor 30 beispielsweise durch Klebung mit einem ringförmigen Sensorträger 40 verbunden, der zusammen mit dem Sensor 30 zwischen der Buchse 8 und der Kontaktscheibe 29 eingespannt ist. Im mittleren Bereich des Sensors 30 ist ein Kraftübertragungsteil 41, beispielsweise durch Klebung, auf dem Sensor 30 befestigt, daß ursprünglich Teil des Sensorträgers 40 war und erst nach der Klebung und damit nach genauer Fixierung zum Sensorträgerkranz 40a von diesem durch Abtrennung von Verbindungsstegen 42 getrennt wird. Dieses Kraftübertragungsteil 41 nimmt das eine Ende einer Feder 14 auf, die in diesem Ausführungsbeispiel sowohl als Druckfeder als auch als Zugfeder wirksam ist. Um dies zu ermöglichen, ist das eine Ende der Feder 14 im Kraftübertragungsteil 41, beispielsweise durch Klebung, befestigt, während das andere Ende der Feder 14 fest mit dem Taster 12, beispielsweise durch Klebung, verbunden ist. Bei dieser Ausbildung kann die Grundstellung des Tasters 12, unabhängig von den Einzelteiltoleranzen genau eingestellt werden und die Feder 14 übt in der Grundstellung keine Kraft auf den Sensor 30 aus. Das bedeutet, daß hier der Taster 12 keinen Kragen 13 aufweist, wie er bei der Ausführung nach Fig. 9 erforderlich ist. Sofern nicht die Bewegung des Tasters 12 durch die Außenkontur des Gehäuses 28 begrenzt ist, müssen auch hier Anschläge 38 vorgesehen werden, die entweder am Sensorträgerkranz 40a oder, wie in Fig. 9, an der Kontaktscheibe 29 vorgesehen sind.

Bei dem Ausführungsbeispiel der Fig. 14 und 15 ist der Sensor 43 als Welle ausgebildet, die an ihrer Mantelfläche mindestens ein Widerstandselement 18/32 trägt. Die Welle 43 besitzt eine einstückig mit ihr verbundene Scheibe 44, die mit einem Hebel 45 fest verschraubt ist. Das andere Ende der Welle 43 ist mit einem radialen Schlitz 46 versehen, in dem das eine Ende einer Spiralfeder 47 fest eingesetzt ist. Das andere Ende der Spiralfeder 47 liegt an einem Zapfen 48 an, der von einem weiteren Hebel 49 getragen wird. Jede Änderung des Winkels zwischen den beiden Hebeln 45,49 wird über die Feder 47 als Meßkraft in den wellenförmigen Sensor 43 eingeleitet und über die Widerstandselemente 18/32 gemessen.

Bei dem Ausführungsbeispiel der Fig. 16 ist das Gehäuse 28 aus zwei Gehäuseteilen 28a, 28b gebildet, die miteinander verschraubt sind. Über die Buchse 8 sind auch hier der Sensor 30 und die Kontaktscheibe 29 in dem Gehäuseteil 28b gesichert. In dem Gehäuseteil 28a ist der Taster 12 axial verschiebbar geführt, der über eine zwischen dem Kraftübertragungsteil 41 und dem Taster 12 fest eingespannte, unter Vorspannung stehende Zugfeder 14 in seiner gezeichneten Grundstellung an einer Stirnfläche der Buchse 8 anliegt. Über einen im Gehäuseteil 28a angeordneten Kanal 50, der an einer Seite des Gehäuseteiles 28a durch einen nicht dargestellten Stopfen oder eine Befestigungsschraube verschlossen ist, kann Druckluft mit einem Druck von beispielsweise 0,5 bis 2,0 bar in das Gehäuse 28 eingeleitet werden. Dabei ist es Voraussetzung, daß die Bohrung in der Kontaktscheibe 29 über die die nicht dargestellten Leitungen 21 nach außen geführt sind, dichtend abgeschlossen ist, so daß sich in dem Gehäuse 28 ein Druck aufbauen kann. Durch diesen Druck wird der Taster 12, wie strichliert angedeutet, nach außen bis an ein Werkstück, ein Stellglied oder dgl. bewegt, wobei der Taster 12 das Stellglied auch selbst sein kann. Durch die Messung des elektrischen Widerstandes an dem dabei verformten Sensor 30 läßt sich die jeweilige Stellung des Tasters 12 exakt bestimmen bzw. messen.

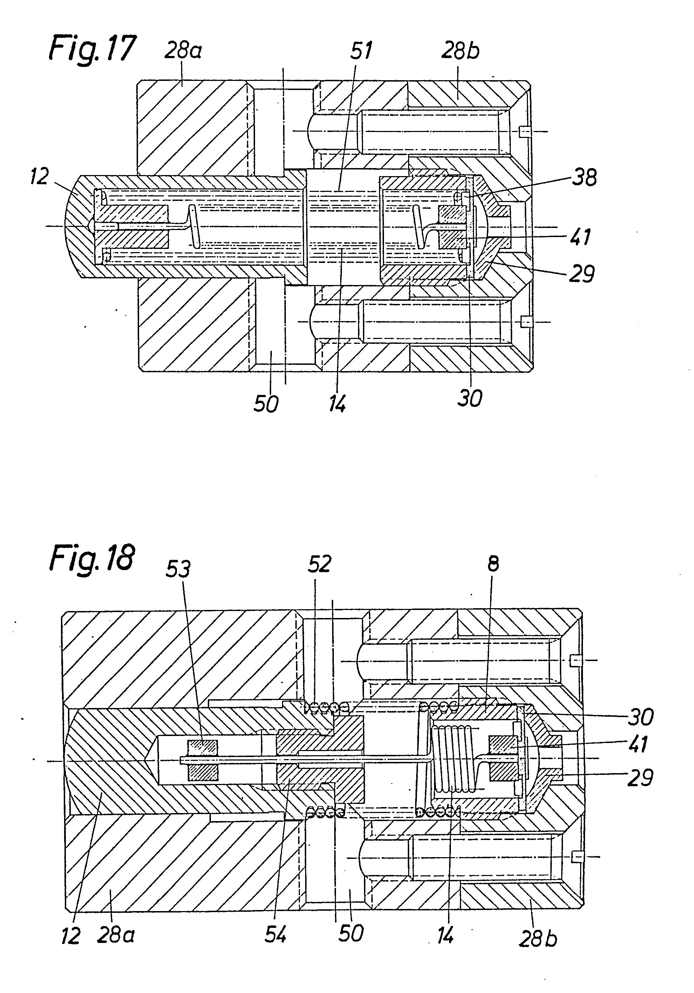

Das Ausführungsbeispiel der Fig. 17 stimmt in seinem grundsätzlichen Aufbau mit dem Ausführungsbeispiel der Fig. 16 überein. Zwischen dem Taster 12 und dem Sensor 30 bzw. den Anschlägen 38 sind hier sowohl die die Meßkraft erzeugende Zugfeder 14 als auch eine Druckfeder 51 angeordnet. Dabei bestimmt die Druckfeder 51 die äußere Stellung des Tasters 12, solange das zu messende Werkstück oder Stellglied noch nicht zum Anliegen gebracht ist. Im Gegensatz zu den Fig. 1, 4, 9 und 10, wo der Meßweg etwa 0,5 mm beträgt, ist hier ein Meßweg bis 100 mm und mehr erreichbar. Über den Kanal 50 kann Druckluft zugeführt werden, die die Kraft der Druckfeder 51 bei abgedichteter Bohrung in der Kontaktscheibe 29 unterstützt und als Spülluft verwendet wird.

Patentanwalt Walter Koßobutzki · Waldstraße 6 · 5419 Helferskirchen

- 13 -

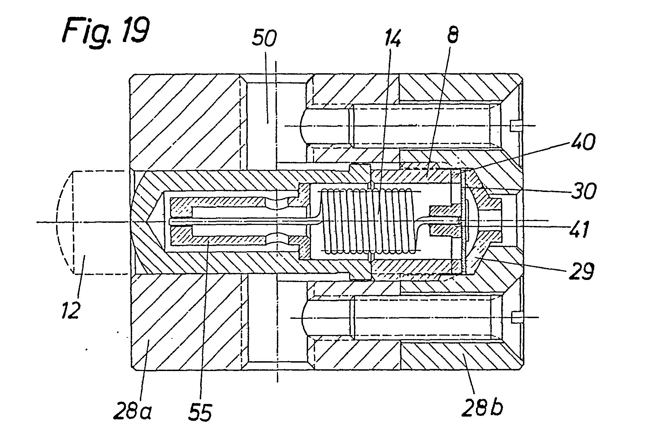

Bei dem Ausführungsbeispiel der Fig. 18 ist ebenfalls eine weitgehende Übereinstimmung mit dem Ausführungsbeispiel der Fig. 16 gegeben. Auch hier wird der Taster 12 durch über den Kanal 50 eingeleitete Druckluft bei abgedichteter Bohrung in der Kontaktscheibe 29 in seine Meßstellung bewegt. Diese Bewegung erfolgt gegen die Kraft einer Zugfeder 52, die kraft- und/oder formschlüssig mit der Buchse 8 und dem Taster 12 verbunden ist. Ein Unterschied besteht darin, daß auf das dem Sensor 30 abgewandte Ende der Feder 14 ein Mitnehmer 53 fest aufgebracht ist, der erst dann die Feder 14 spannt, wenn der Taster 12 einen vorbestimmten Weg zurückgelegt hat und eine in den Taster 12 eingedrehte Schraube 54 am Mitnehmer 53 zum Anliegen kommt. Der Gesamthub des Tasters 12 setzt sich hier aus einem Leerhub und einem Meßweg zusammen. Die Größe des Leerhubes kann vorgegeben werden und beträgt beispielsweise etwa 4,0 bis 5,0 mm. Die Größe des Meßweges wäre dann etwa 1,0 mm. Aber auch jede andere Länge und jedes andere Längenverhältnis ist erreichbar.

In Fig. 19, die der Fig. 16 weitgehend entspricht, ist zur Temperaturkompensation ein Ausgleichskörper 55 zwischen Taster 12 und Feder 14 angeordnet, dessen Ausdehnung der Ausdehnung der Feder 14 entspricht. Dabei kann durch die Festlegung der Länge auch die temperaturabhängige Änderung des Elastizitätsmoduls der Feder 14 kompensiert werden. Bedarfsweise kann das gestreckte Ende der Feder 14 im Bereich des Ausgleichskörpers 55 durch einen Stahl mit geringer Längenausdehnung gebildet werden.

Diese Vorrichtung kann ebenfalls als Bausatz in einen Pneumatik- oder Hydraulikzylinder sowie in ein Stell- oder Regelventil eingebaut werden, wobei dann der Taster entfallen kann bzw. dem Arbeits- oder Stellorgan zugeordnet wird. Mit dieser Vorrichtung kann aber auch die Durchwölbung eines Balkens oder einer Scheibe gemessen werden, die beispielsweise unter Kraft- oder Druckbelastung steht.

In Abänderung der erläuterten Ausführungsbeispiele ist es möglich, den Sensor metallisch leitend, beispielsweise durch Bonden oder Löten, entweder direkt mit Anschlußleitungen zu verbinden oder an die Kontaktflächen anzuschließen, die dann mit den Anschlußleitungen verbunden sind. In diese metallische Verbindung können Abgleich- oder Trimmwiderstände eingefügt werden, die Bestandteil einer Verbindungsschicht sind. In Abhängigkeit vom Einsatzzweck der Meßvorrichtung kann der Innenraum des Gehäuses gasdicht verschlossen und beispielsweise mit einem Schutzgas gefüllt sein. Weiterhin ist es möglich, den Sensor mit dem Sensorträger fest, beispielsweise durch Klebung, zu verbinden. Bei einer solchen Ausbildung kann die Kontaktscheibe entfallen.

Patentanwalt Walter Koßobutzki · Waldstraße 6 · 5419 Helferskirchen

K 165

— 15 —

Dipl.-Ing. Horst Knäbel, Friedenstraße 10a, 4005 Meerbusch 1

Patentansprüche

1. Verfahren zur Überprüfung und/oder Erfassung der Maße, Maßänderungen, Positionen oder Positionsänderungen von Werkstücken, Stellgliedern oder dgl., bei dem eine Meß- oder Stellgröße von einem Taster abgegriffen und auf ein elastisch verformbares Meßglied übertragen wird, dadurch gekennzeichnet, daß der Weg des Tasters über eine besondere, verhältnismäßig weiche Feder in eine der Meß- oder Stellgröße entsprechende Kraft umgewandelt und auf einen Sensor übertragen wird.

2. Verfahren nach Anspruch 1, dadurch gekennzeichnet, daß die Kraft als Druck- und/oder Zugkraft oder als Torsionsmoment auf den Sensor übertragen wird.

3. Verfahren nach Anspruch 1 oder 2, dadurch gekennzeichnet, daß durch mindestens eine Feder und/oder eine druckwirksame Fläche eine Meßwiderstandskraft geschaffen wird, die unabhängig von der dem Meßweg entsprechenden Kraft ist.

4. Verfahren nach einem der Ansprüche 1 - 3, dadurch gekennzeichnet, daß der Sensor ein dem Meßwert entsprechendes Signal abgibt.

5. Vorrichtung zur Überprüfung und/oder Erfassung der Maße, Maßänderungen, Positionen oder Positionsänderungen von Werkstücken, Stellgliedern oder dgl., insbesondere zur Durchführung des Verfahrens nach Anspruch 1, bestehend aus einem Taster und einem diesem zugeordneten, elastisch verformbaren Meßglied,
dadurch gekennzeichnet,
daß das Meßglied als Sensor (16,23,30,43) ausgebildet und zwischen dem Taster (12,45,49) und dem Sensor (16,23, 30,43) eine besondere, verhältnismäßig weiche Feder (14,47) angeordnet ist.

6. Vorrichtung nach Anspruch 5,
dadurch gekennzeichnet,
daß der Sensor (16,23,30,43) durch eine Platte, Welle, Hülse oder dgl. mit mindestens einem elektrischen Widerstand (18,18a,32) gebildet ist.

7. Vorrichtung nach Anspruch 6,
dadurch gekennzeichnet,
daß der Sensor als Dehnungsmeß- und/oder biezoresistiver Kraftsensor ausgebildet ist.

8. Vorrichtung nach Anspruch 5,
dadurch gekennzeichnet,
daß der Sensor als Ventil, Drossel oder dgl. ausgebildet ist.

9. Vorrichtung nach einem der Ansprüche 5 - 8,
dadurch gekennzeichnet,
daß der Sensor mit einer Hilfsenergie beaufschlagbar bzw. versorgbar ist.

10. Vorrichtung nach einem der Ansprüche 6 - 9,
dadurch gekennzeichnet,
daß der Sensor (23,30) form- und/oder kraftschlüssig in einem Gehäuse (28) angeordnet ist.

11. Vorrichtung nach einem der Ansprüche 6 - 10,
dadurch gekennzeichnet,
daß der Taster (12) das Stell-, Positionier- oder
Arbeitsorgan eines Ventils, Zylinders oder dgl. ist.

12. Vorrichtung nach einem der Ansprüche 6 - 10,
dadurch gekennzeichnet,
daß der Taster (12) als Schenkel einer Winkelmeßeinrichtung ausgebildet ist.

13. Vorrichtung nach Anspruch 11 oder 12,
dadurch gekennzeichnet,
daß der Taster (12) mit der Feder (14), dem Kraftübertragungsglied (41) und dem Sensor (30) zu einer Baueinheit fest und einzelteiltoleranzneutral verbunden ist.

14. Vorrichtung nach Anspruch 13,
dadurch gekennzeichnet,
daß die Verbindung durch Klebung oder Lötung gebildet
ist.

15. Vorrichtung nach einem der Ansprüche 5 - 15,
dadurch gekennzeichnet,
daß die zwischen Taster (12) und Sensor (16,23,30,43)
angeordnete Feder (14) als Zug- und/oder Druckfeder,
Schenkel-, Spiral-, Biege-, Torsions-, Dreh- oder Blattfeder ausgebildet ist und vorzugsweise aus einem Werkstoff mit geringer Wärmedehnung und geringer Hysterese
besteht.

16. Vorrichtung nach Anspruch 15,
dadurch gekennzeichnet,
daß die Feder (14) unter Vorspannung eingebaut ist.

17. Vorrichtung nach einem der Ansprüche 5 - 16,
dadurch gekennzeichnet,
daß der Taster (12) auswechselbar ausgebildet ist.

18. Vorrichtung nach Anspruch 17,
dadurch gekennzeichnet,
daß der Taster (12) in einer auswechselbaren Buchse (8) angeordnet ist.

19. Vorrichtung nach einem der Ansprüche 5 - 18,
dadurch gekennzeichnet,
daß der Taster (12) eine dem Sensor (23,30,43) zugewandte Ausnehmung zur zumindest teilweisen Aufnahme der Feder (14) aufweist.

20. Vorrichtung nach einem der Ansprüche 17 - 19,
dadurch gekennzeichnet,
daß der Taster (12) mit einem getrennt einsetzbaren, verschleißfesten Tastkopf (26) ausgerüstet ist.

21. Vorrichtung nach einem der Ansprüche 5 - 20,
dadurch gekennzeichnet,
daß zwischen dem Sensor (30) und dem Taster (12) eine zusätzliche Stelleinrichtung angeordnet ist.

22. Vorrichtung nach Anspruch 21,
dadurch gekennzeichnet,
daß die Stelleinrichtung durch eine Feder (51,52) gebildet ist.

23. Vorrichtung nach Anspruch 22,
dadurch gekennzeichnet,
daß die Stelleinrichtung durch die die Meß- und Stellgröße übertragende Feder (14) gebildet ist.

Patentanwalt Walter Koßobutzki · Waldstraße 6 · 5419 Helferskirchen

- 19 -

24. Vorrichtung nach Anspruch 21,

    dadurch gekennzeichnet,

    daß die Stelleinrichtung als eine mit Druckmittel beaufschlagbare Kammer (50) ausgebildet ist.

25. Vorrichtung nach einem der Ansprüche 5 - 12 und 15 - 24 dadurch gekennzeichnet,

    daß der Sensor (16,23,30) in einem Raum angeordnet ist,
    der an eine Spülluftleitung angeschlossen ist.

26. Vorrichtung nach einem der Ansprüche 5 - 25,

    dadurch gekennzeichnet,

    daß ein Kraftübertragungsteil (41) Teil eines Sensorträgers (40) ist, das erst nach Aufbringung des Sensors
    (30) abgetrennt wird.

27. Vorrichtung nach einem der Ansprüche 5 - 26,

    dadurch gekennzeichnet,

    daß der Sensor (30) durch Druckkontakt mit den Meßleitungen (21) über eine Kontaktscheibe (29) verbindbar ist.

28. Vorrichtung nach einem der Ansprüche 5 - 27,

    dadurch gekennzeichnet,

    daß der Weg des Tasters (12) durch einen Anschlag begrenzbar ist.

29. Vorrichtung nach Anspruch 28,

    dadurch gekennzeichnet,

    daß der Anschlag durch die Kontaktscheibe oder den Sensorträger gebildet ist.

30. Vorrichtung nach einem der Ansprüche 5 - 29,

    dadurch gekennzeichnet,

    daß dem Sensor (30) ein widerstandsbeeinflussender Tem-
    peraturkompensator zugeordnet ist.

- 20 -

31. Vorrichtung nach einem der Ansprüche 5 - 30,
dadurch gekennzeichnet,

daß dem Taster (12) ein die Wärmedehnungen in der
Meßebene und die temperaturabhängige Änderung des
Elastizitätsmoduls der Feder (14) kompensierender
Ausgleichskörper zugeordnet ist.

**Fig.1**

**Fig. 2**

**Fig. 3**

Fig.4

Fig. 5

Fig. 7

Fig. 6

Fig. 8

Fig.9

Fig. 11

Fig. 12

Fig.10

Fig. 13

Fig.14

49

48

47

45          46

Fig. 15

49

45

18(32)
46
43

44        47

Fig.16        12          14

29

4

41

30

28   28a      50            8    28b

Fig.17

Fig.18

*Fig. 19*